# EUROPEAN PATENT APPLICATION

(11) **EP 4 339 455 A1**
(43) Date of publication of application: **20.03.2024**
(21) Application number: 22382849.2
(22) Date of filing: 14.09.2022
(51) Int. Cl.: F03D 13/10, F03D 13/20

(54) **TOWER FOR A WIND TURBINE, WIND TURBINE AND METHOD FOR MANUFACTURING A TOWER OF A WIND TURBINE**

(71) Applicant: Siemens Gamesa Renewable Energy Innovation & Technology S.L., 31621 Sarriguren (Navarra) (ES)
(72) Inventor: Alonso Gainza, Javier, 31621 Sarriguren, Navarra (ES); Cal Hernandez, Alexandre, 01009 Vitoria (ES); Unanua Hermoso de Mendoza, Pablo, 31699 Olloki - Navarra (ES)
(74) Representative: SGRE-Association

(57) **Abstract**

A tower (6) for a wind turbine (1), comprising at least one tubular tower section (8), the tower section (8) including two or more ring segments (14, 15, 16, 17) forming together a ring element (13) and a connection arrangement (18, 43) connecting two adjacent ones (14, 15) of the ring segments (14, 15, 16, 17) with each other, wherein the connection arrangement (18, 43) comprises gap generation means (19, 44) for generating and maintaining a predefined gap (20) between the two adjacent ring segments (14, 15).

By allowing the gap between the connected ring segments, arranging and connecting the ring segments is facilitated. In particular, a lower precision in positioning the ring segments next to each other is required. Further, the gap generation means allow re-adjustment of the relative position of the connected ring sections at any time during manufacture and/or operation.

## Description

The present invention relates to a tower for a wind turbine, a wind turbine with such a tower and a method for manufacturing a tower of a wind turbine.

The energy production of a wind turbine at a given site increases with the height of the rotor hub. The rotor of a modern wind turbine is, therefore, supported by a tower being a tall, thin structure. There are several construction designs of wind turbine towers known such as self-supporting tubular steel towers, steel lattice towers, and concrete towers. Currently, most wind turbines comprise a tubular steel tower. The steel tower is usually made in sections of 20 to 40 meter which are connected with each other on-site.

In the effort to build very high towers for wind turbines with heights exceeding 100 meters, concrete towers or concrete tower sections are coming into focus. Concrete towers provide large carrying capacities and allow, therefore, to bear large rotors. For example, hybrid towers were developed which comprise a lower tower portion made of concrete and an upper tower portion made of steel. The upper steel tower portion may have a tubular or a lattice structure. Such hybrid towers are combining the advantages of concrete and steel structures.

Using pre-manufactured concrete segments and connecting these segments on-site to assemble a concrete tower or a concrete tower section facilitates manufacture and transportation issues related to building wind turbine towers.

It is one object of the present invention to provide an improved tower for a wind turbine and an improved method for manufacturing a wind turbine tower.

According to a first aspect, a tower for a wind turbine is provided. The tower comprises at least one tubular tower section. The tower section includes two or more ring segments forming together a ring element and a connection arrangement connecting two adjacent ones of the ring segments with each other. Further, the connection arrangement comprises gap generation means for generating and maintaining a predefined gap between the two adjacent ring segments.

Having the gap generation means, a gap between the adjacent ring segments can be easily generated. By allowing the gap between the connected ring segments, arranging and connecting the ring segments is facilitated. In particular, a lower precision in positioning the ring segments next to each other is required. Further, the gap generation means allow re-adjustment of the relative position of the connected ring segments at any time during manufacture and/or operation. Hence, the ring element formed by the two or more ring segments can be re-shaped easily during manufacture and/or operation.

Moreover, since the connection arrangement comprising the gap generation means is part of the tower, an external tool for the purpose of generating a predefined gap between the ring segments is not necessary.

The wind turbine is an apparatus to convert the wind's kinetic energy into electrical energy. The wind turbine comprises, for example, a rotor having one or more blades connected each to a hub, a nacelle including a generator, and the tower holding, at its top end, the nacelle. The tower of the wind turbine is connected to a foundation of the wind turbine, such as a monopile in the seabed or a concrete foundation.

The wind turbine is, for example, an onshore or an offshore wind turbine.

The tower is, for example, a concrete tower or a hybrid tower comprising a lower tower portion made of concrete and an upper tower portion made of steel. The upper steel tower portion may have a tubular or a lattice structure.

The term "vertical direction" and/or "height direction" used herein refers, in particular, to a vertical direction and/or height direction of the tower in the erected state.

The tubular tower section is, in particular, a hollow tower section having a cylindrical shape or a conical shape tapered in the height direction towards a top portion of the tower.

The tubular tower section is, for example, a concrete tubular tower section. The tubular tower section is, for example, a portion of a concrete tower or forms the concrete portion of a hybrid tower. In other examples, the tubular tower section can also be a tubular steel tower section.

The ring segments are, for example, pre-manufactured concrete segments. The ring segments are, for example, pre-manufactured at a manufacturing site/hall, transported to the erection site of the wind turbine and assembled at the erection site. The ring segments are, for example, assembled (i.e., connected to each other to form the ring element) before hoisting the connected ring segments to already installed components of the tower.

The two or more ring segments are forming - when connected to each other - the ring element. The ring element is a closed ring element apart from the gaps between the ring segments. The gaps may be filled with a filling material such that the ring segments and the filling material in the gaps form a closed (e.g., watertight) skin.

The two or more ring segments are dividing the ring element with respect to a horizontal direction of the tower. The horizontal direction is perpendicular to the vertical direction of the tower in the erected state.

The ring element may have, in particular, a cylindrical shape or a conical shape. The ring element may have, for example, a circular base area. However, the ring element can also have a base area with another shape such as a polygonal shape (e.g., regular convex polygon).

The connection arrangement with the gap generation means comprises, for example, means to pull the two adjacent ring segments towards each other and means to push the two adjacent ring segments away from each other. Further, the connection arrangement with the gap generation means comprises, for example, means to fix the two adjacent ring segments in position relative to each other.

The connection arrangement with the gap generation means is, in particular, part of the tower and/or wind turbine in the fully manufactured state (e.g., in a state ready for operation and/or during operation).

The tower and/or wind turbine in the fully manufactured state comprises, in particular, the gap between the two adjacent ring segments.

The predefined gap is, in particular, a gap with a predefined size.

The (predefined) size of the gap has, for example, a value in the range of a few Millimeters. The size of the gap has, for example, a value in the range of 1 to 10 mm, preferably a value of 5 mm.

The gap size can, for example, also be 100 mm or smaller, 50 mm or smaller, 30 mm or smaller and/or 10 mm or smaller.

The gap between the two adjacent ring segments is, in particular, formed by vertical surfaces of the respective ring segments. The vertical surfaces of the ring segments are, in particular surfaces extending vertically with respect to the height direction of the tower and radially with respect to a central axis of the tower.

The tower may also comprise, for example, more than one connection arrangement for connecting the two adjacent ring segments and for generating a single gap.

Further, the tower may also comprise more than one connection arrangement for providing the connection at multiple gaps between pairs of adjacent ring segments.

The tower may, for example, comprise more than two ring segments forming a single ring element. The tower may, for example, comprise at least one connection arrangement for each pair of adjacent ring segments to connect said pair of adjacent ring segments with each other and to generate a gap between said pair of adjacent ring segments.

According to an embodiment of the first aspect, the gap generation means are configured to adjust a size of the gap between the ring segments based on a predetermined size.

By adjusting the size of the gap between adjacent ring segments, the shape of the connected ring segments (e.g., the shape of the ring element) can be adjusted during manufacture of the tower (for example, before and/or after hoisting the connected ring segments on already installed tower components) and/or during operation of the wind turbine.

According to a further embodiment, the predetermined size is predetermined based on determined tolerances required for assembling the ring segments, for adjusting a position of the ring segments during erecting the tower, and/or for balancing bending moments of the tower during operation of the wind turbine.

According to a further embodiment of the first aspect,
the two adjacent ring segments have the same vertical height with respect to a height direction of the tower in the erected state, and
the gap between the two adjacent ring segments is a vertical gap extending over the entire height of the ring segments, and/or
the gap generation means are configured to generate the gap between the two adjacent ring segments over the entire height of the ring segments.

The gap between the two adjacent ring segments is, in particular, formed by vertical surfaces of the respective ring segments extending over the entire height of the ring segments. The vertical surfaces of the ring segments are, in particular surfaces extending vertically with respect to the height direction of the tower and radially with respect to a central axis of the tower.

The "gap extending over the entire height of the ring segments" includes, in particular, that portions of the gap generation means bridge the gap to maintain the gap. In embodiments, also other elements such as plates and/or shims may bridge the gap.

According to a further embodiment of the first aspect, the gap between the two adjacent ring segments is filled with an elastic material.

The elastic material includes, for example, a rubber, a synthetic rubber, a natural rubber and/or a EPDM rubber (ethylene propylene diene monomer rubber).

The elastic material can be provided before or after hoisting of the connected ring segments for erecting the tower.

According to a further embodiment of the first aspect, the gap generation means include:
two plates fixed respectively at the two adjacent ring segments such that they are arranged opposite each other forming a gap between them, each plate having a protruding portion protruding into an inner cavity of the ring element and a borehole arranged in its protruding portion,
a threaded rod inserted through the boreholes of the two plates, and
at least two nuts engaged with the threaded rod such that at least one of the two plates is clamped between two of the nuts.

With this configuration of the gap generation means, the gap is generated by means of the engagement of the threaded rod with the at least two nuts.

The threaded rod comprises, in particular, external threads. Each of the at least two nuts comprises, in particular, a borehole with internal threads. By engaging the external threads of the rod with the internal threads of the nuts, the two plates, and thus the two adjacent ring segments are fixed to each other with the gap in between them.

The plates are, for example, made from metal such as steel.

A first nut of the at least two nuts is, in particular, engaged with the threaded rod, with respect to the first plate, in front of the second plate. Further, a second nut of the at least two nuts is, in particular, engaged with the threaded rod, with respect to the first plate, behind the second plate.

The first nut is, in particular, engaged with the threaded rod within the gap between the two plates.

A main extension plane of each of the two plates extends, in particular, in the vertical and radial direction.

According to a further embodiment of the first aspect, each of the two plates has a first and a second plate portion angled with respect to each other so as to form an L-shaped profile, and the respective first plate portion is fixed to an interior wall of the respective ring segment and the respective second plate portion forms the protruding portion protruding into the inner cavity of the ring element (e.g., the tower section).

Having the L-shaped profile of the plates allows an easy and strong attachment of the plates at the interior surface of the ring segments and at the same time provides the protruding portions for the rod-nut-connection.

The interior wall of the respective ring segment is an interior wall with respect to the inner cavity of the ring element and/or the tower section.

In embodiments, also other shapes than L-shaped profiles are possible for the plates as long as they provide the protruding portion. For example, the plates may also each have a U-shape or full squared-shape.

According to a further embodiment of the first aspect, the gap generation means include at least four nuts engaged with the threaded rod, wherein two first ones of the at least four nuts are engaged with the threaded rod such that one of the two plates is clamped between the two first nuts, and two second ones of the at least four nuts are engaged with the threaded rod such that the other one of the two plates is clamped between the two second nuts.

Alternatively to this embodiment, the threaded rod may be fixedly connected (e.g., welded) to the other one of the two plates.

According to a further embodiment of the first aspect, the gap generation means include:
two plates fixed respectively at the two adjacent ring segments such that they are arranged opposite each other forming a gap between them, each plate having a protruding portion protruding into an inner cavity of the ring element, a first one of the two plates having one borehole, and a second one of the two plates having a borehole corresponding to the borehole of the first plate and an additional borehole,
a first screw inserted through the corresponding boreholes of the first and second plates, and
a second screw inserted through the additional borehole of the second plate and butting against a surface of the first plate, said surface facing the second plate.

With this configuration of the gap generation means, the gap is generated by means of the second screw butting against the surface of the first plate facing the second plate. Hence, the second screw functions as a spacer between the first and second plates.

The borehole of the first one of the two plates comprises, for example, internal threads for engaging with external threads of the first screw. However, the first screw may also be fastened by other means such as a nut engaging with external threads of the first screw (e.g., a freely rotating nut or a nut welded to the first one of the two plates.

Further, the additional borehole of the second plate comprises, for example, internal threads for engaging with external threads of the second screw.

The plates are, for example, made from metal such as steel.

According to a further embodiment of the first aspect, the first screw comprises a screw head butting against a surface of the second plate, said surface facing away from the first plate.

According to a second aspect, a wind turbine with an above-described tower is provided.

According to an embodiment of the second aspect, the wind turbine comprises a foundation, wherein the gap generation means are configured to adjust a size of the gap between the ring segments before and/or after hoisting the connected ring segments onto the foundation or onto other components of the tower section already installed on the foundation.

According to a third aspect, a method for manufacturing a tower of a wind turbine is provided. The tower comprises at least one tubular tower section including two or more ring segments forming together a ring element. Furthermore, the method comprises the steps of:
a) arranging two ring segments adjacent to each other,
b) connecting the two ring segments with each other such that a gap is formed between the two ring segments by means of a connection arrangement with gap generation means of the tower, and
c) maintaining the gap by means of the gap generation means.

Since the connection arrangement with the gap generation means is part of the tower, no external connecting arrangement and/or external gap generation means are necessary.

With this method, pre-manufactured (e.g., concrete) ring segments may, for example, be connected at the erection site of the wind turbine (e.g., on the ground close to the foundation of an onshore erection site or on a vessel or nearby onshore location close to an offshore erection site).

The term "method for manufacturing a tower of a wind turbine" includes assembling the tower from pre-manufactured segments and/or installing the tower on-site.

According to an embodiment of the third aspect, the gap is maintained by means of the gap generation means during hoisting the connected ring segments for erecting the tower, during installing remaining components of the tower, and/or during operation of the wind turbine.

The connected ring segments are, for example, hoisted by means of a crane.

In embodiments, the method includes the step of hoisting the connected ring segments for erecting the tower.

According to a further embodiment of the third aspect, the gap is adjusted by means of the gap generation means before hoisting the connected ring segments for erecting the tower, during installing remaining components of the tower, and/or during operation of the wind turbine.

The embodiments and features described with reference to the tower of the present invention apply mutatis mutandis to the wind turbine and the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows a tower section of a tower of the wind turbine of Fig. 1 during manufacture according to an embodiment;
Fig. 3 shows a ring element of the tower of Fig. 1 according to a first embodiment;
Fig. 4 shows an enlarged partial view of Fig. 3;
Fig. 5 shows a ring element of the tower of Fig. 1 according to a second embodiment;
Fig. 6 shows an enlarged partial view of Fig. 5; and
Fig. 7 shows a flowchart illustrating a method for manufacturing a tower of the wind turbine of Fig. 1 according to an embodiment.

In the Figures, like reference numerals designate like or functionally equivalent elements, unless otherwise indicated.

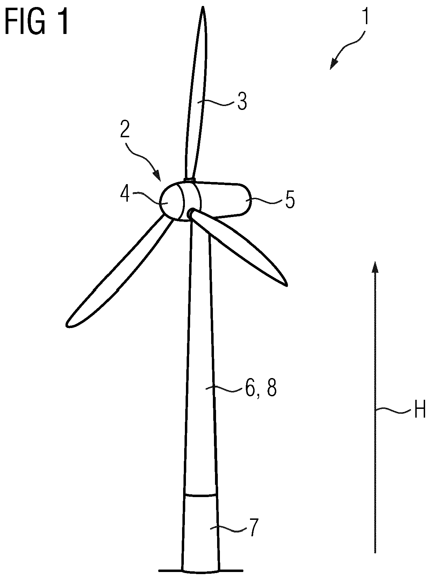

Fig. 1 shows a wind turbine 1 according to an embodiment. The wind turbine 1 comprises a rotor 2 having one or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1. The tower 6 is erected on a foundation 7 such as a monopile or concrete foundation. The foundation 7 is connected to and/or driven into the ground or seabed.

The tower 6 extends in a height direction H. The height direction H is a vertical direction of the tower 6 in the erected state.

The tower 6 comprises at least one tubular tower section 8. Fig. 1 shows just one tubular tower section 8. However, the tower 6 may also comprise more than one tubular tower section 8, the more than one tubular tower sections 8 dividing the tower 6 in the height direction H.

The tower 6 is, for example, a concrete tower. Thus, the one or more tubular tower sections 8 are, for example, concrete tower sections. In other examples, the tower 6 may also be a hybrid tower comprising a concrete tubular tower section 8 in a bottom portion thereof and a steel tower section (not shown) in a top portion thereof.

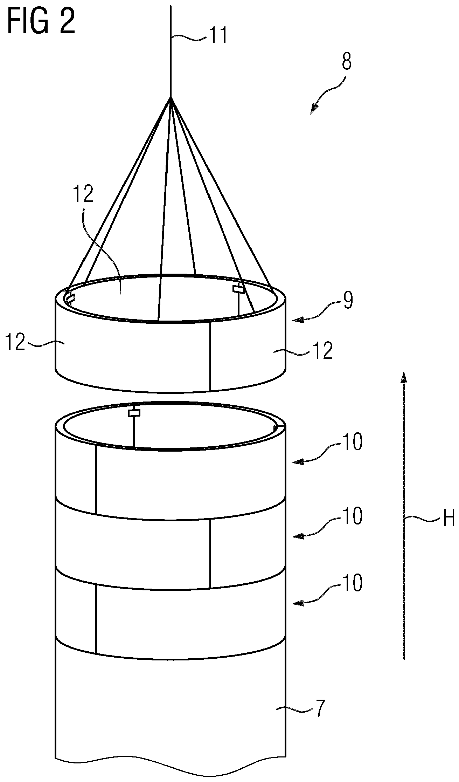

Fig. 2 shows the (e.g., concrete) tubular tower section 8 during manufacture, e.g., assembly of the tower section 8 and/or installation of the tower section 8. The tubular tower section 8 is assembled from multiple ring elements 9, 10. The ring elements 9, 10 are hoisted by means of a crane 11 (only partly shown) and are arranged on top of each other. Fig. 2 illustrates a state in which ring element 9 is hoisted on top of already installed ring elements 10.

Each ring element 9, 10 is assembled from several (e.g., concrete) pre-manufactured ring segments 12. In the example of Fig. 2, each ring element 9, 10 is assembled from three ring segments 12.

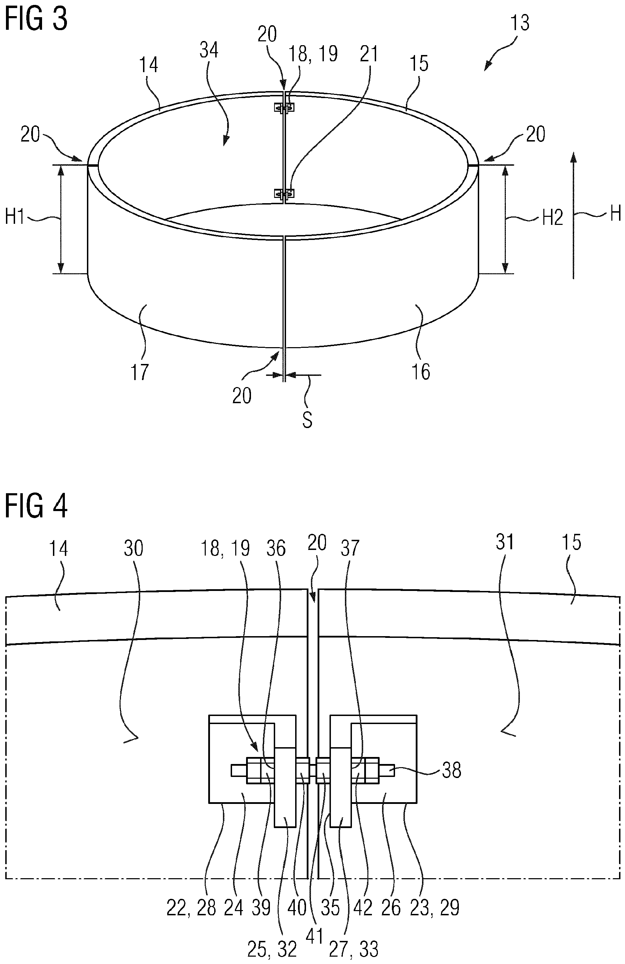

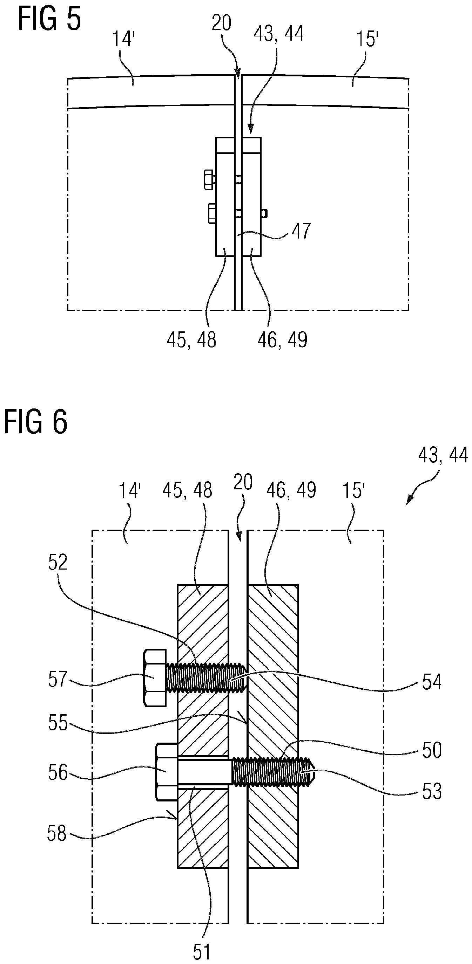

The (e.g., three) ring segments 12 forming together a single ring element 9 are connected with each other by means of a connection arrangement shown in Fig. 3 or 5.

Fig. 3 shows a further ring element 13. The ring element 13 is similar as the ring element 9, 10 in Fig. 2 apart from being comprised of four ring segments 14, 15, 16 and 17 instead of three.

Fig. 3 shows a first embodiment of a connection arrangement 18 for connecting two adjacent ring segments 14, 15 with each other. The connection arrangement 18 comprises gap generation means 19. Hence, the connection arrangement 18 with the gap generation means 19 is configured for mechanically connecting (fixing) two adjacent ring segments 14, 15 with each other and at the same time generating a gap 20 between the two adjacent ring segments 14, 15. In other words, the connection arrangement 18 with the gap generation means 19 is configured for fixing one ring segment 14 at a second adjacent ring segment 15 such that a gap 20 remains between these ring segments 14, 15. The gap 20 is in particular a vertical gap extending in the height/vertical direction H of the tower 6.

A size of the gap 20 is, for example, a few Millimeters (e.g., 5 mm).

The two or more ring segments (e.g., four ring segments 14 to 17) have in particular the same height H1, H2. Exemplarily shown in Fig. 3 is the height H1 of a first ring segment 14 and the height H2 of a second ring segment 15, with H1 being equal to H2. The gap 20 is, in particular, extending over the entire height H1, H2 of the ring segments 14, 15.

As shown in Fig. 3, the two adjacent ring segments 14, 15 may be connected with each with more than one connection arrangement 18, 21 arranged spaced apart from each other in the vertical direction H.

Fig. 4 shows an enlarged view of the upper connection arrangement 18 with the gap generation means 19 of Fig. 3.

The gap generation means 19 include two plates 22, 23 fixed respectively at the two adjacent ring segments 14, 15. The plates 22, 23 are made from metal such as steel.

In the shown example of Figs. 3 and 4, the plates 22, 23 each comprises a first plate portion 24, 26 and a second plate portion 25, 27. The first and second plate portions 24, 25 (26, 27) of a respective plate 22 (23) are arranged angled with respect to each other so as to form an L-shaped profile 28 (29). The first plate portions 24, 26 are fixedly attached to an interior wall 30, 31 of the respective ring element 14, 15. The second plate portions 25, 27 each form a protruding portion 32, 33 protruding into an inner cavity 34 of the ring element 13 (e.g., of the tower section 8).

In other examples, the plates 22, 23 may also have a shape different from an L-shape 28, 29 as long as they are each fixed to the interior wall 30, 31 of the respective ring element 14, 15 and comprise a protruding portion 32, 33.

The plates 22, 23, are arranged opposite each other forming a gap 35 between them. The gap 35 is, in particular, formed between their protruding portions 32, 33.

Each protruding portion 32, 33 comprises a borehole 36, 37.

The gap generation means 19 further include a threaded rod 38 inserted through the boreholes 36, 37 of the two plates 22, 23.

Furthermore, the gap generation means 19 include at least two nuts 39, 40, 41, 42 engaged with the threaded rod 38. In the shown example, the gap generation means 19 include four nuts 39, 40, 41, 42 engaged with the threaded rod 38. Two first nuts 39, 40 are engaged with the threaded rod 38 such that one plate 22 (e.g., its protruding portion 25) of the two plates 22, 23 is clamped between the two first nuts 39, 40, Further, two second nuts 41, 42 are engaged with the threaded rod 38 such that the other plate 23 (e.g., its protruding portion 27) of the two plates 22, 23 is clamped between the two second nuts 41, 42.

By screwing the nuts 39 to 42 onto the rod 38, the size of the gap 35 between the two plates 22, 23 (e.g., between the two protruding portions 25, 27) and, thus, the size of the gap 20 between the two adjacent ring segments 14, 15 is adjusted. At the same time, the two ring segments 14, 15 are fixed to each other.

After connecting all four ring segments 14 to 17 (Fig. 3) with each other by applying similar connection arrangements as the connection arrangement 18, 21, the ring element 13 is assembled. Then, the ring element 13 can be hoisted, for example on top of other already installed components 10 (Fig. 2) of the tower section 8.

The connection arrangements 18, 21 with the gap generating means 19 allow to adjust a size S of each gap 20 (Fig. 3) at any time during the remaining manufacture of the tower 6 and during the operation of the wind turbine 1.

Fig. 5 shows a second embodiment of a connection arrangement 43 with a gap generation means 44 for connecting two adjacent ring segments 14', 15' with each other.

The gap generation means 44 include two plates 45, 46 fixed respectively at the two adjacent ring segments 14', 15' such that they are arranged opposite each other forming a gap 47 between them. The plates 45, 46 are, for example, flat plates. At least a portion 48, 49 of each plate 45, 46 is protruding into the inner cavity 34 (Fig. 3) of the ring element 13 (e.g., the tower section 8).

Fig. 6 shows an enlarged cross-section view of the connection arrangement 43 with the gap generation means 44 of Fig. 5. A first plate 46 of the two plates 45, 46 has one single borehole 50. The borehole 50 of the first plate 46 comprises, for example, internal threads. A second plate 45 of the two plates 45, 46 has a borehole 51 corresponding to the borehole 50 of the first plate 46 and an additional borehole 52. The additional borehole 52 of the second plate 45 comprises, for example, internal threads.

The gap generation means 44 further comprises a first screw 53 inserted through the corresponding boreholes 50, 51 of the first and second plates 45, 46. The first screw 53 comprises, for example, external threads. Said external threads being, for example, engaged with the internal threads of the borehole 50 of the first plate 46. In other examples, the external threads of the first screw 53 may be engaged with a separate nut (not shown); in this example internal threads of the bore hole 50 are not required.

Furthermore, the gap generation means 44 comprises a second screw 54 inserted through the additional borehole 52 of the second plate 45. The second screw 54 comprises, for example, external threads engaged with the internal threads of the borehole 52 of the second plate 45. The second screw 54 is butting against a surface 55 of the first plate 46. The surface 55 of the first plate 46 against which the second screw 54 is butting is a surface facing the second plate 45.

In the shown example, each of the first and second screws 53, 54 comprises a screw head 56, 57. The screw head of the first screw 53 is butting against a surface 58 of the second plate 45, the surface 58 facing away from the first plate 46.

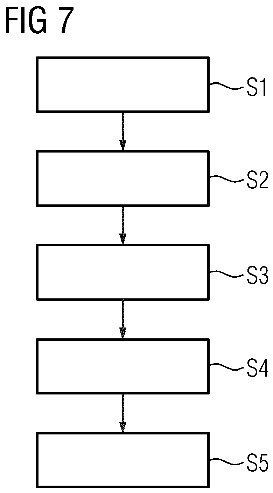

In the following, a method for manufacturing a tower 6 of a wind turbine 1 is described with respect to Fig. 7.

The tower 6 (Fig. 1) comprises at least one tubular tower section 8 including two or more ring segments 14, 15, forming together a ring element element 13 (Fig. 3).

In a first step S1 of the method, the two ring segments 14, 15 (Fig. 3; or 14', 15' in Fig. 5) are arranged adjacent to each other.

In a second step S2 of the method, the two ring segments 14, 15 (14', 15') are connected with each other such that a gap 20 is formed between the two ring segments 14, 15 (14', 15') by means of a connection arrangement 18 (43) with gap generation means 19 (44) of the tower 6.

In a third step S3 of the method, the connected ring segments 14, 15 (14', 15') - and/or the assembled ring element 13 - are hoisted for erecting the tower 6, e.g., onto already installed components (e.g., 20 in Fig. 2).

In a fourth step S4 of the method, the gap 20 is maintained by means of the gap generation means 19 (44).

The gap 20 is, for example, maintained by means of the gap generation means 19 (44) during hoisting in step S3. The gap 20 may, for example, also be maintained by means of the gap generation means 19 (44) during installing remaining components of the tower 6 and/or during operation of the wind turbine 1.

In a fifth step S5 of the method, the gap 20 is adjusted by means of the gap generation means 19 (44).

The gap 20 is, for example, adjusted before step S3 of hoisting the connected ring segments 14, 15 (14', 15') - and/or the assembled ring element 13 - for erecting the tower 6. Step S5 may also be carried out during installing remaining components of the tower 6, and/or during operation of the wind turbine 1.

By allowing the gap 20 between the connected ring segments 14, 15, arranging and connecting the ring segments 14, 15 is facilitated. In addition, the gap generation means 19, 44 allow re-adjustment of the relative position of the connected ring segments 14, 15 - and, thus, re-shaping of the ring element 13 - at any time during manufacture of the tower 6 and/or operation of the wind turbine 1.

Although the present invention has been described in accordance with preferred embodiments, it is obvious for the person skilled in the art that modifications are possible in all embodiments.

## Claims

1. A tower (6) for a wind turbine (1), comprising at least one tubular tower section (8), the tower section (8) including two or more ring segments (14, 15, 16, 17) forming together a ring element (13) and a connection arrangement (18, 43) connecting two adjacent ones (14, 15) of the ring segments (14, 15, 16, 17) with each other, wherein the connection arrangement (18, 43) comprises gap generation means (19, 44) for generating and maintaining a predefined gap (20) between the two adjacent ring segments (14, 15).

2. The tower according to claim 1, wherein the gap generation means (19, 44) are configured to adjust a size (S) of the gap (20) between the ring segments (14, 15) based on a predetermined size.

3. The tower according to claim 2, wherein the predetermined size is predetermined based on determined tolerances required for assembling the ring segments (14, 15), for adjusting a position of the ring segments (14, 15) during erecting the tower (6), and/or for balancing bending moments of the tower (6) during operation of the wind turbine (1).

4. The tower according to one of claims 1 - 3, wherein:
the two adjacent ring segments (14, 15) have the same vertical height (H1, H2) with respect to a height direction (H) of the tower (6) in the erected state, and
the gap (20) between the two adjacent ring segments (14, 15) is a vertical gap (20) extending over the entire height (H1, H2) of the ring segments (14, 15), and/or
the gap generation means (19, 44) are configured to generate the gap (20) between the two adjacent ring segments (14, 15) over the entire height (H1, H2) of the ring segments (14, 15).

5. The tower according to one of claims 1 - 4, wherein the gap (20) between the two adjacent ring segments (14, 15) is filled with an elastic material.

6. The tower according to one of claims 1 - 5, wherein the gap generation means (19) include:
two plates (22, 23) fixed respectively at the two adjacent ring segments (14, 15) such that they are arranged opposite each other forming a gap (35) between them, each plate (22, 23) having a protruding portion (32, 33) protruding into an inner cavity (34) of the tower section (8) and a borehole (36, 37) arranged in its protruding portion (32, 33),
a threaded rod (38) inserted through the boreholes (36, 37) of the two plates (22, 23), and
at least two nuts (41, 42) engaged with the threaded rod (38) such that at least one (23) of the two plates (22, 23) is clamped between two (41, 42) of the nuts (41, 42).

7. The tower according to claim 6, wherein each of the two plates (22, 23) has a first and a second plate portion (24, 25, 26, 27) angled with respect to each other so as to form an L-shaped profile (28, 29), and the respective first plate portion (24, 26) is fixed to an interior wall (30, 31) of the respective ring segment (14, 15) and the respective second plate portion (25, 27) forms the protruding portion (32, 33) protruding into the inner cavity (34) of the tower section (8) .

8. The tower according to claim 6 or 7, wherein the gap generation means (19) include at least four nuts (39, 40, 41, 42) engaged with the threaded rod (38), wherein two first ones (39, 40) of the at least four nuts (39, 40, 41, 42) are engaged with the threaded rod (38) such that one (22) of the two plates (22, 23) is clamped between the two first nuts (39, 40), and two second ones (41, 42) of the at least four nuts (39, 40, 41, 42) are engaged with the threaded rod (38) such that the other one (23) of the two plates (22, 23) is clamped between the two second nuts (41, 42).

9. The tower according to one of claims 1 - 5, wherein the gap generation means (44) include:
two plates (45, 46) fixed respectively at the two adjacent ring segments (14', 15') such that they are arranged opposite each other forming a gap (47) between them, each plate (45, 46) having a protruding portion (48, 49) protruding into an inner cavity (34) of the tower section (8), a first one (46) of the two plates (45, 46) having one borehole (50), and a second one (45) of the two plates (45, 46) having a borehole (51) corresponding to the borehole (50) of the first plate (46) and an additional borehole (52),
a first screw (53) inserted through the corresponding boreholes (50, 51) of the first and second plates (45, 46), and
a second screw (54) inserted through the additional borehole (52) of the second plate (45) and butting against a surface (55) of the first plate (46), said surface (55) facing the second plate (45).

10. The tower according to claim 9, wherein the first screw (53) comprises a screw head (56) butting against a surface (58) of the second plate (45), said surface (58) facing away from the first plate (46).

11. A wind turbine (1) with a tower (6) according to one of claims 1 - 10.

12. The wind turbine according to claim 11, comprising a foundation (7), wherein the gap generation means (19, 44) are configured to adjust a size (S) of the gap (20) between the ring segments (14, 15) before and/or after hoisting the connected ring segments (14, 15) onto the foundation (7) or onto other components (10) of the tower section (8) already installed on the foundation (7).

13. A method for manufacturing a tower (6) of a wind turbine (1), the tower (6) comprising at least one tubular tower section (8) including two or more ring segments (14, 15) forming together a ring element (13), and the method comprising the steps of:
a) arranging (S1) two ring segments (14, 15) adjacent to each other,
b) connecting (S2) the two ring segments (14, 15) with each other such that a gap (20) is formed between the two ring segments (14, 15) by means of a connection arrangement (18, 43) with gap generation means (19, 44) of the tower (6), and
c) maintaining (S4) the gap (20) by means of the gap generation means (19, 44).

14. The method according to claim 13, wherein the gap (20) is maintained by means of the gap generation means (19, 44) during hoisting (S3) the connected ring segments (14, 15) for erecting the tower (6), during installing remaining components of the tower (6), and/or during operation of the wind turbine (1).

15. The method according to claim 13 or 14, wherein the gap (20) is adjusted (S5) by means of the gap generation means (19, 44) before hoisting (S3) the connected ring segments (14, 15) for erecting the tower (6), during installing remaining components of the tower (6), and/or during operation of the wind turbine (1).
